# EUROPEAN PATENT APPLICATION

(11) **EP 0 967 575 A2**
(43) Date of publication of application: **29.12.1999**
(21) Application number: 99112044.5
(22) Date of filing: 22.06.1999
(51) Int. Cl.: G06T 9/00

(54) **Method and apparatus for image data compression and decompression**

(30) Priority: 23.06.1998 JP 17609998
(71) Applicant: NEC CORPORATION, Tokyo (JP)
(72) Inventor: Hihara, Hiroki, c/o NEC Corporation, Tokyo (JP); Okamoto, Hiroshi, c/o NEC Corporation, Tokyo (JP)
(74) Representative: Baronetzky, Klaus, Dipl.-Ing.

(57) **Abstract**

A method and an apparatus for image data compression and a method and an apparatus for image data expansion are disclosed which are capable of obviating the overflow and frequent underflow of compressed image data to be sent. A data compressing circuit compresses a plurality of frames of image data input to a data input buffer frame by frame. A data output buffer continuously outputs the compressed image data while temporarily holding a plurality of frames of image data at a time. A capacity detecting circuit detects the capacity of the frames of image data held in the data output buffer. The compression ratio of the data compressing circuit is controlled in accordance with the detected capacity. As a result, the capacity of compressed image data to be continuously sent is maintained substantially constant and prevented from overflowing or frequently underflowing.

## Description

### BACKGROUND OF THE INVENTION

The present invention relates to a method of compressing image data or similar data and a method of expanding the compressed image data. More particularly, the present invention relates to a method and an apparatus for compressing and sending a plurality of set data and a method and an apparatus for receiving and expanding the compressed set data. Further, the present invention is concerned with a method and a system for data communication of the type sending a plurality of continuous set data and expanding the set data received, and a storage medium storing a program for causing a computer to execute various kinds of processing in the form of software.

Image data are extensively used in various fields and interchanged by communication. The problem with image data is that they have a far greater capacity than, e.g., test data and are likely to exceed a communication capacity available. To solve this problem, image data are usually compressed at the time of transmission and then expanded at the time of receipt. For the compression of image data representative of, e.g., still pictures, a JPEG (Joint Photographic Coding Experts Group) system is available. Also, for the compression of moving pictures, an MPEG (Moving Picture Coding Experts Group) system is available.

The MPEG system is capable of compressing image data representative of moving pictures with high efficiency. However, because the MPEG system uses a correlation between a plurality of continuous still pictures, it is not feasible for the compression of continuous still pictures having no correlation. To compress continuous pictures having no correlation, use may be made of a Motion MPEG system capable of compressing a plurality of still pictures one by one with the JPEG system. When a plurality of continuous still pictures are to be sent, the Motion JPEG system, for example, is successful to reduce the capacity of image data.

However, conventional image compression systems have a problem that although a plurality of frames of image data to be compressed my have a constant capacity, the capacity of compressed data is not constant, depending on the contents of the image data. It follows that a plurality of frames of continuous image data individually compressed and sequentially sent are not constant in capacity and are apt to exceed the communication capacity.

In light of the above, the image data may be compressed by a compression ratio high enough to prevent the capacity of compressed data from exceeding the communication capacity. This, however, causes most of a plurality of frames of image data to be needlessly compressed by the high compression ratio and thereby degrades the quality of expended image data.

Technologies relating to the present invention are disclosed in, e.g., Japanese Patent Laid-Open Publication Nos. 5-191799, 6-253259, and 8-289299.

### SUMMARY OF THE INVENTION

It is therefore an object of the present invention to provide a method and an apparatus for compressing a plurality of frames of continuous image data while preventing the capacity of compressed data from exceeding a communication capacity available, and sending the compressed data.

It is another object of the present invention to provide a method and an apparatus for receiving the image data compressed by the above method and apparatus, and expanding the received data.

It is still another object of the present invention to provide a method and a system for data communication using the above method and apparatus for compression and transmission and the method and apparatus for receipt and expansion.

It is a further object of the present invention to provide a storage medium storing a program for causing a computer or compression and transmission apparatus to execute the above method for compression and transmission.

In accordance with the present invention, a method of accepting a plurality of continuous set data, compressing the plurality of set data set by set, and continuously sending the compressed set data set by set while temporarily holding a preselected number of set data at a time includes the steps of detecting the capacity of the preselected number of set data temporarily held, and controlling the compression ratio of the set data in accordance with the capacity detected.

Also, in accordance with the present invention, an apparatus for compressing data and sending the compressed data includes a data inputting circuit to which a plurality of set data are continuously input, a data compressing circuit for compressing the plurality of set data input to the data inputting circuit set by set, a data holding circuit for outputting the set data compressed by the data compressing circuit set by set while temporarily holding a preselected number of set data at a time, a capacity detecting circuit for detecting the capacity of the preselected number of set data held in the data holding circuit, and a compression control circuit for varying the compression ratio of the data compressing circuit in accordance with the capacity detected by the capacity detecting circuit.

Further, in accordance with the present invention, a method of receiving data and expanding the data includes the steps of accepting a plurality of continuous set data compressed independently of each other, detecting the compression ratio of each of the plurality of set data, expanding each of the plurality of set data with a particular compression ratio detected, and continuously outputting the plurality of set data expanded.

Moreover, in accordance with the present invention, an apparatus for receiving data and expanding the data includes a data inputting circuit to which a plurality of continuous set data compressed independently of each other are input, a compression detecting circuit for detecting the compression ratio of each of the plurality of set data, a data expanding circuit for expanding each of the plurality of set data with a particular compression ratio detected, and a data outputting circuit for continuously outputting the plurality of set data expanded.

In addition, in accordance with the present invention, in a storage medium storing software which a computer is capable of reading, a program to be executed by the computer includes accepting a plurality of set data continuously input, compressing the plurality of set data set by set, temporarily holding a preselected number of compressed set data at a time, continuously outputting the preselected number of set data temporarily held, detecting the capacity of the preselected number of set data temporarily held, and varying the compression ratio of the set data in accordance with the capacity detected.

### BRIEF DESCRIPTION OF THE DRAWINGS

The above and other objects, features and advantages of the present invention will become more apparent from the following detailed description taken with the accompanying drawings in which:
FIG. 1 is a block diagram schematically showing a data communication system embodying the present invention;
FIG. 2 is a schematic block diagram showing a specific construction of a compression and transmission apparatus included in the system of FIG. 1;
FIG. 3 is a schematic block diagram showing a specific configuration of a quantizing circuit included in the apparatus of FIG. 2;
FIG. 4 is a schematic block diagram showing a specific construction of a receipt and expansion apparatus also included in the system of FIG. 1; and
FIG. 5 is a flowchart demonstrating a specific procedure to be executed by the apparatus of FIG. 3.

### DESCRIPTION OF THE PREFERRED EMBODIMENT

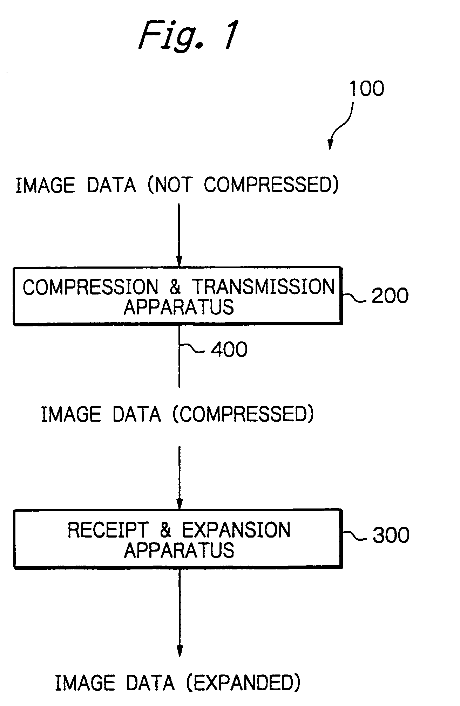

Referring to FIG. 1 of the drawings, a data communication system embodying the present invention is shown and generally designated by the reference numeral 100. As shown, the data communication system 100 includes a compression and transmission apparatus 200 and a receipt and expansion apparatus 300 connected to each other by a data communication line 400. The compression and transmission apparatus 200 compresses input image data and sends the compressed image data via the data communication line 400. The receipt and expansion apparatus 300 expands the image data received via the data communication line 400.

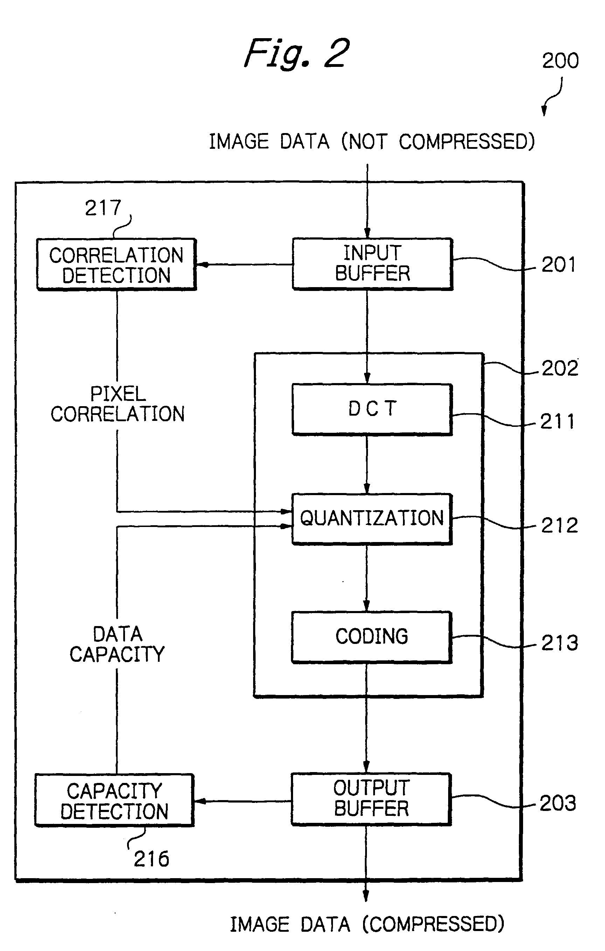

As shown in FIG. 2, the compression and expansion apparatus 200 has hardware mainly consisting of an input buffer or data inputting means 201, a data compression circuit or data compressing means 202, and an output buffer or data holding means 203 which are sequentially connected, as illustrated. Specifically, the input buffer 201 receives a plurality of continuous set data each being representative of a particular frame or still picture. The data compression circuit 202 compresses the plurality of frames of image data frame by frame. The output buffer 203 continuously outputs the compressed image data frame by frame while temporarily holding a preselected number of frames at a time. As a result, the compressed image data are sent to the receipt and expansion apparatus 300 via the data communication line 400.

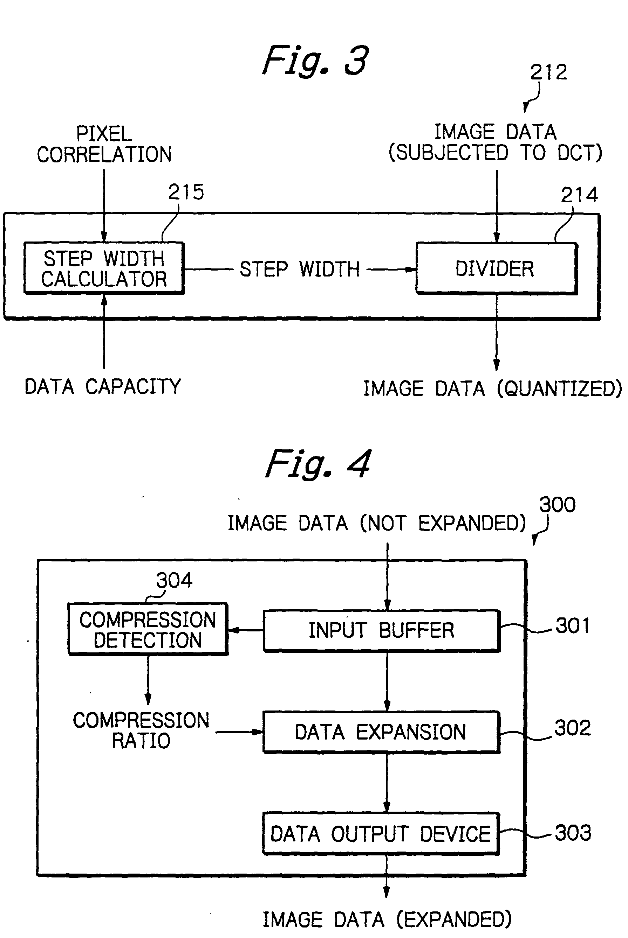

The data compression circuit 202 includes a DCT (Discrete Cosine Transform) 211, a quantization 212, and a coding or data coding means 213. As shown in FIG. 3, the quantization 212 is made up of a divider 214 or data quantizing means 214 and a step width calculator 215. The DCT 211 executes DCT with each image data. The quantization 212 quantizes the image data subjected to DCT by using a preselected step width. The coding 213 codes the quantized image data output from the quantization 212 to Huffman codes. With this configuration, the data compression circuit 202 compresses the image data input from the input buffer 201 frame by frame and delivers the compressed image data to the output buffer 203.

More specifically, as shown in FIG. 3, the step width calculator 215 calculates a nominal value representative of a step width for quantization and feeds the nominal value to the divider 214. The divider 214 divides the image data by the nominal value to thereby quantize them. The step width may be "16", "32" or any other suitable value preselected as a standard value. A suitable number of pixels, e.g., 256 pixels are selected beforehand for the quantization of the image data.

Referring again to FIG. 2, a capacity detection or capacity detecting means 216 is connected to the output buffer 203 and the step calculator 215, FIG. 3, of the quantization 212. A correlation detection or correlation detecting means 217 is connected to the input buffer 201 and the step calculation 215.

The capacity detection 216 determines the capacity of the preselected number of frames of image data temporarily held in the output buffer 203 and informs the quantization 212 of the determined capacity. The correlation detection 217 determines a correlation between a plurality of pixels of the image data input to the input buffer 201 and reports the determined correlation to the step width calculation 215 of the quantization 212. The step width calculator 215 calculates a step width for quantization matching with the data capacity while adjusting it in accordance with the correlation between the pixels.

In the quantization 214, the divider 214 quantizes the image data with the step width received from the step width calculation 215. Consequently, the data compression circuit 202 compresses the image data with a ratio matching with the capacity of the image data held in the output buffer 203 and the correlation between the pixels of the image data input to the input buffer 201.

The data compression circuit 202 is constructed to compress the image data in a format defined by ISO/IEC10918-1. Specifically. the circuit 202 describes a time of change of the step width and a new step width in the application data segment of the compressed image data.

As shown in FIG. 4, the receipt and expansion apparatus 300 includes an input buffer or data inputting means 301, a data expansion or data expanding means 302, a data output device or data outputting means 303, ends compression detection or compression detecting means 304. The input buffer 301 receives the plurality of frames of image data representative of still pictures sequentially coming in via the data communication line 400. The data expansion 302 expands the image data input to the input buffer 301 frame by frame. The data output device 303 includes, e.g., a CRT (Cathode Ray Tube) for continuously outputting the expanded image data fed from the data expansion 304.

It should be noted that the compression detection 304 determines a compression ratio of image data frame by frame and reports the determined compression ratio to the data expansion 302. The data expansion 302 therefore expands the image data with the frame-by-frame compression ratios received from the compression detection 304.

More specifically, the compression detection 304 detects a time of change of the step width and a new step width out of the application data segment of the image data compressed in the ISO/IEC10918-1 format, and reports them to the data expansion 302.

In operation, in the data communication system 100, the compression and transmission apparatus 200 compresses a plurality of continuous image data and sends the compressed image data to the receipt and expansion apparatus 300 via the data communication line 400, as in a conventional system. The receipt and expansion apparatus 300 expands the compressed data received from the compression and transmission apparatus 200.

What is unique to the data communication system 100 is that the compression ratio is dynamically varied in accordance with the capacity of image data compressed by the compression and transmission apparatus 200, maintaining the capacity of image data sent via the data communication line 400 constant at all times. Therefore, while the plurality of frames of image data continuously received by the receipt and expansion apparatus 300 have been suitably varied in compression ratio, the apparatus 300 controls expansion by detecting the compression ratios out of the image data. Consequently, the compressed image data are output after adequate expansion.

The operation of the compression and transmission apparatus 200 and that of the receipt and expansion apparatus 300 will be described in detail hereinafter. First, in the compression and transmission apparatus 200, the input buffer 201 receives a plurality of continuous set data each being representative of a particular frame or still picture. The data compression circuit 202 compresses the plurality of frames of image data frame by frame. At this instant, the DCT 211 executes DCT with each image data. The divider 214 of the quantization 212 quantizes the image data subjected to DCT by using a preselected step width. The coding 213 codes the quantized image data output from the quantization 212 to Huffman codes. As a result, the image data are compressed in the ISO/IEC10918-1 format. Because the step width for quantization, i.e., the compression ratio is variable, as stated earlier, a time of change of the step width and a new step width are described in the application data segment of the compressed image data.

The output buffer 203 continuously outputs the compressed image data frame by frame while temporarily holding a preselected number of frames at a time. As a result, the compressed image data are sent to the receipt and expansion apparatus 300 via the data communication line 400. With this configuration, the data compression circuit 202 compresses the plurality of frames of image data continuously input thereto and delivers the compressed image data to the output buffer 203. In the illustrative embodiment, the capacity detection 216 determines the capacity of the preselected number of frames of image data temporarily held in the output buffer 203, as stated earlier. The step width calculator 215 controls the compression ratio of the data compression 202 in accordance the data capacity.

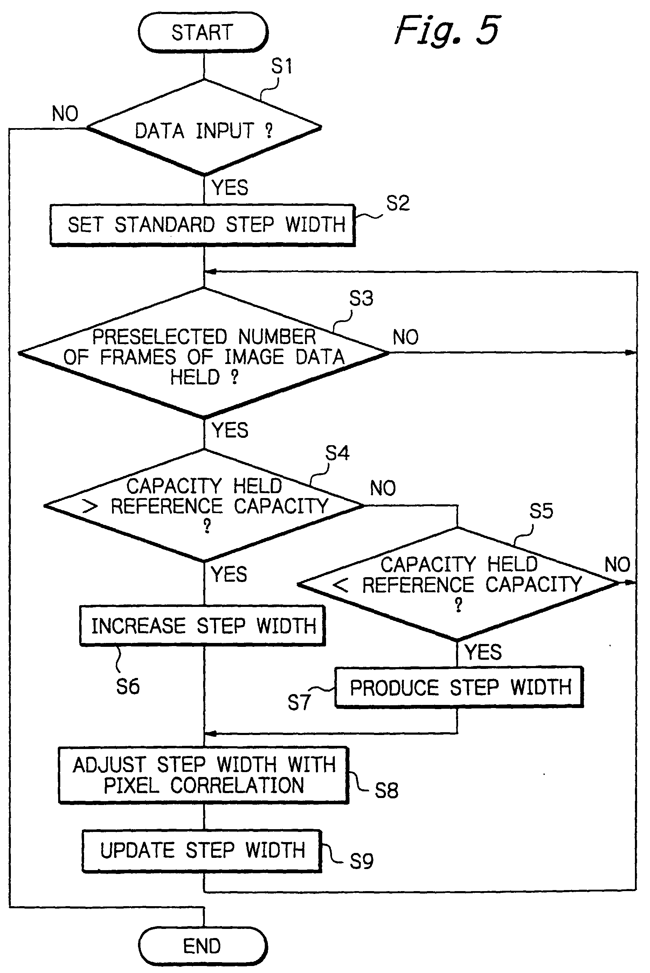

The above procedure will be described more specifically with reference to FIG. 5. As shown, the compression and transmission apparatus 200 constantly waits for a plurality of frames of continuous image data. When such image data are input (Y, step S1), the apparatus 200 sets a standard step width, or compression ratio, in the divider 214 of the quantization 212 (step S2).

The capacity detection 216 monitors the output buffer 203 to see if a preselected number of frames of image data are held therein (step S3). When such a number of frames are held in the output buffer 203 (Y, step S3), the step width calculator 215 compares the capacity of the data held in the output buffer 203 with a preselected reference capacity (steps S4 and S5). If the capacity of the data held in the output buffer 203 is greater than the reference capacity (Y, step S4). the step width calculator 215 increases the step width (step S6); if otherwise (N, step S4 and Y, step S5), the calculator 215 reduces the step width (step S7).

Further, when the image data are input to the input buffer 201. the correlation detection 217 detects a correlation between the pixels of the image data and feeds it to the step width calculator 215, as stated earlier. Therefore, the step width calculator 215 corrects the compression ratio of the data compression 202 in accordance with the above correlation (step S8) and then updates the step width (step S9).

The step width calculator 215 executes the above correction by use of a preselected algorithm. For example, the calculator 215 corrects the compression ratio such that image quality or data capacity after compression and estimated from the correlation between the pixels will not sharply change.

The step width calculator 215 sets the updated step width in the divider 214. Therefore, the circuitry following the divider 214 quantizes the image data with the updated step width. As a result, the compression ratio of the data compression 211 is varied in accordance with the data capacity of the output buffer 203.

If the capacity of the data stored in the output buffer 203 is equal to the reference capacity (N, step S4 and N, step S5), then the program simply returns to the step S3 without varying or updating the step width for quantization. When the input of the continuous image data ends (N, step S1), the program ends. When new frames of continuous image data are input later (Y, step S1), the standard step width is again set in the divider 214 (step S2).

As stated above, if the capacity of image data compressed and held is great, the compression and transmission apparatus 200 increases the compression ratio for the subsequent image data and thereby reduces the capacity; if otherwise, the apparatus 200 reduces the compression ratio and thereby increases the capacity. That is, the apparatus 200 dynamically varies the compression ratio of the data compression 211 in accordance with the capacity of data held in the output buffer 203. This is successful to maintain the capacity of image data compressed and continuously sent via the data communication line 400 substantially constant. Stated another way, the capacity of data sent from the apparatus 200 is prevented from exceeding the capacity of the data communication line 400.

The receipt and expansion apparatus 300 receives the image data subjected to the dynamic compression ratio variation via the data communication line 400. The compression detection 304 determines the compression ratio of the image data input to the input buffer 301 frame by frame. Specifically, the compression detection 304 detects a time of change of change of the step width and a new step width out of the application data segment of the image data compressed in the ISO/IEC10918-1 format, as stated previously. The data expansion 302 expands each frame of image data with a particular compression ratio determined by the compression detection 304. The expanded image data are sequentially output via the data output device 303. The apparatus 300 is therefore capable of expanding each frame of image data with a particular adequate compression ratio.

As described above, the compression and transmission apparatus 200 dynamically varies the compression ratio of image data in accordance with a capacity of data to appear after compression. The apparatus 200 can therefore maintain the capacity of data to be sent after compression substantially constant, thereby obviating overflow or frequency excessive underflow during data communication. Further, because the apparatus 200 corrects the compression ratio in accordance with a correlation between the pixels of image data before compression, image quality is prevented from critically falling after expansion.

The receipt and expansion apparatus 300 is capable of expanding each frame of image data with a particular adequate compression ratio. Particularly, in the illustrative embodiment, the image data are compressed in a conventional format while compression ratio data is written to a user area. This allows the compression and transmission apparatus 200 to easily report the dynamically varied compression ratios to the receipt and expansion apparatus 300. In addition, this report does not increase the capacity of data to be sent.

In the above embodiment, the compression and transmission apparatus 200 compresses the image data in the ISO/IEC10918-1 format and describes compression data in the application data segment of image data. Alternatively, the apparatus 200 may compress the image data in an ISO/IEC10918-3 format and describe an updated step width by using a data identifier "QS_CHANGE Signalling" available with the above format. In such an alternative case, the identifiers representative of compression data and added to compressed image data allow even a conventional receipt and expansion apparatus to adequately expand the image data compressed by the dynamically varied compression ratios.

While the transmission apparatus 200 and receipt apparatus 300 are assumed to be connected together by the wired data communication line 400, they may, of course, be connected by a radio channel. In addition, the plurality of continuous set data are not limited to image data representative of still pictures shown and described.

The various means constituting the compression and transmission apparatus 200 each are implemented exclusive hardware. The hardware may be entirely or partly replaced with suitable software mounted on a computer, if desired. When use is made of software, a RAM (Random Access Memory) or similar storage medium which the computer can read will store a program causing the computer to receive a plurality of frames of continuous image data, to compress the image data frame by frame, temporarily hold a preselected number of frames of compressed image data at a time, to determine the capacity of the image date held, and to control the compression ratio of the image data in accordance with the determined capacity.

It is to be noted that the above storage medium may be implemented by a ROM (Read Only Memory) or an HDD (Hard Disk Drive) affixed to an apparatus including a computer or a CD (Compact Disk)-ROM or an FD (Floppy Disk) removably mounted on the above apparatus. The crux is that the storage medium be capable of storing the above program in the form of software.

Further, in the illustrative embodiment, a computer refers to an apparatus capable of reading a program implemented as software and executing processing in accordance with the program. In this sense, the computer may be implemented by, e.g., an apparatus including a CPU (Central Processing Unit) with a ROM, a RAM, an I/F and other devices connected thereto, as needed.

Causing the computer to execute various kinds of processing in accordance with the software also means causing it to control the various devices. For example, that the computer accepts set data may refer to that it recognizes set data input to the I/F. The set data referred to in the illustrative embodiment is a preselected set made up of a number of data, e.g., one frame of graphic or text data.

Further, that the computer temporarily holds set data means may mean that it stores various kinds of data in the RAM or similar storage medium connected thereto or in a memory built in the computer or in an FD.

In summary, it will be seen that the present invention provides a data communication system having various unprecedented advantages. as enumerated below.
(1) In a compression and transmission apparatus, when a plurality of set data are continuously input to data inputting means, data compressing means sequentially compresses the set data set by set. Data holding means continuously outputs the compressed set data while temporarily holding a preselected number of sets at a time. At this instant, capacity detecting means determines the capacity of the preselected number of set data. Compression control means controls the compression ratio of data compressing means in accordance with the above capacity. The system can therefore maintain the capacity of the plurality of set data compressed and continuously output substantially constant, thereby obviating overflow and frequent excessive underflow during data communication. This is also true when the plurality of set data are implemented as a plurality of frames of image data.
(2) In the compression and transmission apparatus, data transforming means executes DCT with the image data while data quantizing means quantizes the transformed image data. When data coding means codes the quantized image data, the compression control means controls the step width for quantization assigned to the data quantizing means. It is therefore possible to easily control the compression ratio of image data as a step width available with a conventional compression scheme.
(3) By adding compression data to the image data compressed in various ratios, it is possible to add dynamically varied compression ratios to the image data and therefore to adequately expand such image data. It is to be noted that the compression data may additionally include a time of change of the compression ratio. For example, so long as data representative of a particular compression ratio is added to each frame of image data, data representative of the time of change is not necessary. However, when the compression ratio is varied on the basis of a plurality of continuous frames of image data, a time of change of the compression ratio should preferably be added together with the compression ratio.
(4) The compression and transmission apparatus compresses the image data in the ISO/IEC10918-1 format and describes at least data representative of an updated step width in the application data segment of the image date which the user can freely use. This can be done without increasing the capacity of data after compression.
(5) Alternatively, the compression and transmission apparatus may compress the image data in the ISO/IEC10918-3 format and describe at least data representative of an updated step width by using a data identifier ^{"}QS_CHANGE Signalling" available with the above format. This allows the transmission apparatus to generate image data such that even a conventional receipt and expansion apparatus can adequately expand them.
(6) Correlation detecting means detects a correlation between a plurality of pixels of the image data input to the data inputting means. The compression control means corrects the compression ratio of the data compressing means in accordance with the determined correlation. The compression ratio is therefore compressed in accordance with the characteristic of the image data.
(7) In a receipt and expansion apparatus, when the plurality of compressed set data are continuously input to data inputting moans, compression detecting means detects the compression ratio of each set data. Data expanding means expands each of the set data with a particular compression ratio output from the compression detecting means. The expanded set data are continuously output via data outputting means. Therefore, the continuous set date varied by suitable compression ratios set by set can be adequately expanded. This is also true when the plurality of set data are implemented as a plurality of frames of image data.
(8) When the image data compressed in the ISO/IEC10918-1 format are input to the data inputting means of the receipt and expansion apparatus, the compression detecting means detects a step width for quantization out of the application data segment of the image data. The receipt and expansion apparatus can therefore detect the compression ratios out of the data segments which the user can freely use, and can adequately expand the image date whose expansion ratios have been dynamically varied.
(9) In the data communication system, while the compression and transmission apparatus sends a plurality of frames of continuous image data while dynamically varying the compression ratio, the receipt and expansion apparatus expands the compressed image data while detecting the compression ratios out of the image data. This successfully maintains the capacity of image data compressed and sent substantially constant, i.e., obviates overflow and frequent excessive underflow. Consequently, the image data with various compression ratios can be adequately expanded and then output.
(10) When a computer reads a program stored in a storage medium. it plays the role of the compression and transmission apparatus or the role of the receipt and expansion apparatus. This is also successful to achieve the above advantages (8) and (9).

Various modifications will become possible for those skilled in the art after receiving the teachings of the present disclosure without departing from the scope thereof.

## Claims

1. A method of accepting a plurality of continuous set data, compressing said plurality of set data set by set, and continuously sending compressed set data set by set while temporarily holding a preselected number of set data at a time, said method comprising the steps of:
(a) detecting a capacity of the preselected number of set data temporarily held; and
(b) controlling a compression ratio of the set data in accordance with the capacity detected.

2. An apparatus for compressing date and sending compressed data, comprising:
data inputting means to which a plurality of set data are continuously input;
data compressing means for compressing the plurality of set data input to said data inputting means set by set;
data holding means for outputting the set data compressed by said data compressing means set by set while temporarily holding a preselected number of set data at a time;
capacity detecting means for detecting a capacity of the preselected number of set data held in said data holding means; and
compression control means for varying a compression ratio of said data compressing means in accordance with the capacity detected by said capacity detecting means.

3. An apparatus for compressing data end sending compressed data, comprising:
data inputting means to which a plurality of frames of image data representative of still pictures are continuously input;
data compressing means for compressing the plurality of frames of image data input to said data inputting means frame by frame;
data holding means for outputting the image data compressed by said data compressing means frame by frame while temporarily holding a preselected number of frames of image data at a time;
capacity detecting means for detecting a capacity of the preselected number of frames of image data held in said data holding means; end
compression control means for varying a compression ratio of said data compressing means in accordance with the capacity detected by said capacity detecting means.

4. An apparatus as claimed in claim 3, wherein said data compressing means comprises:
data transforming means for executing DCT (Discrete Cosine Transform) with the image data;
date quantizing means for quantizing transformed image data output from said data transforming means with a preselected step width; and
data coding means for coding quantized image data output from said data quantizing means;
said compression control means controlling the step width of said data quantizing means.

5. An apparatus as claimed in claim 3, wherein said data compressing means adds at least data representative of the compression ratio to the compressed image data.

6. An apparatus as claimed in claim 5, wherein said data compressing means compresses the image data in a format defined by ISO/IEC10918-1 and describes at least data representative of an updated step width for quantization in an application data segment of the compressed data.

7. An apparatus as claimed in claim 5, wherein said data compressing means compresses the image data in a format defined by ISO/IEC10918-3 and describes at least data representative of an updated step width for quantization by using a data identifier "QS_CHANGE Signalling" available with said format.

8. An apparatus as claimed in claim 3, further comprising correlation data detecting means for detecting a correlation between a plurality of pixels of the image data input to said data inputting means, said compression control means correcting the compression ratio of said data compressing means in accordance with said correlation detected.

9. A method of receiving data and expanding said data, comprising the steps of:
(a) accepting a plurality of continuous set data compressed independently of each other;
(b) detecting a compression ratio of each of the plurality of set data:
(c) expanding each of the plurality of set data with a particular compression ratio detected; and
(d) continuously outputting the plurality of set data expanded.

10. A data communication method comprising the steps of:
(a) accepting a plurality of continuous set data;
(b) compressing the plurality of set data set by set;
(c) continuously sending compressed set data set by set while temporarily holding a preselected number of set data at a time;
(d) detecting a compression ratio of each of the plurality of set data;
(e) expanding each of the plurality of set data with a particular compression ratio detected; and
(f) continuously outputting the plurality of set data expanded.

11. A method as claimed in claim 10, further comprising (g) detecting, in step (c), a capacity of the preselected number of set data temporarily held, and controlling a compression ratio of said set data in accordance with said capacity detected.

12. An apparatus for receiving data and expanding said data, comprising:
data inputting means to which a plurality of continuous set data compressed independently of each other are input;
compression detecting means for detecting a compression ratio of each of the plurality of set data;
data expanding means for expanding each of the plurality of set data with a particular compression ratio detected; and
data outputting means for continuously outputting the plurality of set data expanded.

13. An apparatus for receiving data and expanding said data, comprising:
data inputting means to which a plurality of frames of image data representative of still pictures and compressed independently of each other are continuously input;
compression detecting means for detecting a compression ratio of each of the plurality of frames of image data;
date expanding means for expanding each of the plurality of frames of image data with a particular compression ratio detected; and
data outputting means for continuously outputting the plurality of frames of data expanded.

14. An apparatus as claimed in claim 13, wherein said data inputting means receives the image data compressed in a format defined by ISO/IEC10918-1, said compression detecting mans detecting updated step widths for quantization out of application data segments of the compressed image data.

15. In a data communication system including a compression and transmission apparatus and a receipt and expansion apparatus, said compression and transmission apparatus comprising:
data inputting means to which a plurality of set data are continuously input:
data compressing means for compressing the plurality of set data input to said data inputting means set by set;
data holding means for outputting the set data compressed by said data compressing means set by set while temporarily holding a preselected number of set data at a time;
capacity detecting means for detecting a capacity of the preselected number of set data held in said data holding means; and
compression control means for varying a compression ratio of said data compressing means in accordance with the capacity detected by said capacity detecting means;
said and receipt expansion apparatus comprising:
data inputting means to which the plurality of continuous set data compressed independently of each other are input;
compression detecting means for detecting a compression ratio of each of the plurality of set data;
data expanding means for expanding each of the plurality of set data with a particular compression ratio detected; and
data outputting means for continuously outputting the plurality of set data expanded.

16. In a data communication system including a compression and transmission apparatus and a receipt and expansion apparatus, said compression transmission device comprising:
data inputting means to which a plurality of frames of image data representative of still pictures are continuously input;
data compressing means for compressing the plurality of frames of image data input to said data inputting means frame by frame;
data holding means for outputting the image data compressed by said data compressing means frame by frame while temporarily holding a preselected number of frames of image data at a time;
capacity detecting means for detecting a capacity of the preselected number of frames of image data held in said data holding means; and
compression control means for varying a compression ratio of said data compressing means in accordance with the capacity detected by said capacity detecting means;
said receipt and expansion apparatus comprising:
data inputting means to which the plurality of frames of image data representative of still pictures and compressed independently of each other are continuously input;
compression detecting means for detecting a compression ratio of each of the plurality of frames of image data;
data expanding means for expanding each of the plurality of frames of image data with a particular compression ratio detected; and
data outputting means for continuously outputting the plurality of frames of data expanded.

17. In a data communication system including a compression and transmission apparatus and a receipt and expansion apparatus, data compressing means compresses image data in a format defined by ISO/IEC10918-1 and describes at least data representative of an updated step width for quantization in an application data segment of the data compressed, and data inputting means receives the image data compressed in a format defined by ISO/IEC10918-1 while compression detecting means detects updated step widths for quantization out of application data segments of said image data compressed.

18. In a storage medium storing software which a computer is capable of reading, a program to be executed by said computer, comprising:
(a) accepting a plurality of set data continuously input;
(b) compressing the plurality of set data set by set;
(c) temporarily holding a preselected number of compressed set data at a time;
(d) continuously outputting the preselected number of set data temporarily held;
(e) detecting a capacity of the preselected number of set data temporarily held; and
(f) varying a compression ratio of the set data in accordance with the capacity detected.

19. In a storage medium storing software which a computer is capable of reading, a program to be executed by said computer, comprising:
(a) accepting a plurality of set data continuously input and compressed independently of each other;
(b) detecting a compression ratio of each of the plurality of set data;
(c) expanding each of the plurality of set data with a particular compression ratio detected; and
(d) continuously outputting the plurality of set data expanded.
